(19) Europäisches Patentamt
European Patent Office
Office européen des brevets

(11) Publication number: 0 351 328
A1

# (12) EUROPEAN PATENT APPLICATION

(21) Application number: 89420243.1

(22) Date of filing: 06.07.89

(51) Int. Cl.5: C 09 D 11/10
C 08 G 63/68, C 08 G 69/44

(30) Priority: 11.07.88 US 217192

(43) Date of publication of application:
17.01.90 Bulletin 90/03

(84) Designated Contracting States: ES GR

(71) Applicant: EASTMAN KODAK COMPANY
343 State Street
Rochester New York 14650 (US)

(72) Inventor: Clark, Gary Thomas
513 Montezuma Road
Kingsport TN 37664 (US)

Wilkin, Louis Alden c/o Eastman Kodak Company
Patent Department 343 State Street
Rochester New York 14650 (US)

(74) Representative: Parent, Yves et al
Kodak-Pathé Département Brevets et Licences Centre
de Recherches et de Technologie Zone Industrielle
F-71102 Chalon-sur-Saône Cédex (FR)

## (54) Curable ink compositions.

(57) Ink compositions which are useful for printing or otherwise coating onto substrates, and are comprised of aqueous systems of (1) linear, water-dissipatable or dispersible, cross-linkable polyester or polyester-amide material, and (2) essentially water insoluble, particulate material such as disperse dyes, pigments, fillers, brightening agents, ultraviolet absorbers, stabilizers, and various organic compounds having such uses as pesticides or the like. These compositions can be used, for example, as printing inks on substrates such as paper, aluminum, plastics, and glass. Subsequent cross-linking, i.e., curing of the coatings by radiation, heat electron beam or other energy sources, imparts thereto excellent adhesion, water-fastness, gloss, scuff resistance, flexibility, lightfastness or the like on various substrates. These compositions, particularly the printing inks, also have little or no odor which is associated with most cross-linkable ink systems, and since the inks are water-based, they are substantially non-polluting.

EP 0 351 328 A1

## Description

## CURABLE INK COMPOSITIONS

This invention concerns ink compositions which are useful for printing or otherwise coating onto substrates, and are comprised of aqueous systems of (1) linear, water-dissipatable or dispersible, cross-linkable polyester or polyesteramide material, (2) and at least one essentially water insoluble, particulate material such as disperse dyes, pigments, fillers, brightening agents, ultraviolet absorbers, stabilizers, and various other organic compounds. These compositions can be used, for example, as printing inks on substrates such as paper, aluminum, plastics, and glass. Subsequent cross-linking, i.e., curing of the coatings by radiation, heat, electron beam or other energy sources, imparts thereto excellent adhesion, water-resistance, gloss, scuff resistance, flexibility, lightfastness or the like on various substrates. These compositions, particularly the printing inks also have little or no odor which is associated with most cross-linkable ink systems, and since the inks are water-based, they are substantially non-polluting.

Whenever the term "water-dissipatable" is used in this description, it will be understood to refer to the activity of a water, or aqueous solution on the polymer. The term is specifically intended to cover those situations wherein the solution dissolves and/or disperses the polyester or polyesteramide therein and/or therethrough. Furthermore, whenever the word "water" is used in this description, it includes not only aqueous solutions but also hot aqueous solutions.

The polymeric materials useful in the present invention are radiation or heat curable linear, water-dissipatable or dispersible polymers having carbonyloxy linking groups (i.e., ester groups of the formula $-\overset{O}{\overset{\|}{C}}-O-$) in the linear molecular structure wherein up to 80% of the linking groups are carbonylamido linking groups, (i.e., amide groups of the formula $-\overset{O}{\overset{\|}{C}}-NH-$) the polymer having an inherent viscosity of from about 0.1 to about 1.0 measured in a 60/40 parts weight solution of phenol/tetrachloroethane at 25° C and at a concentration of 0.25 gram of polymer in 100 mL of the solvent, the polymer containing substantially equimolar proportions of acid equivalents (100 mole %) to hydroxy and amino equivalents (100 mole %), the polymer comprising the reaction products of reactants selected from (a), (b), (c), (d), and (e), or the ester forming or esteramide forming derivatives thereof, as follows wherein all stated mole percentages are based on the total of all acid, hydroxyl and amino equivalents being equal to 200 mole %:

(a) at least one difunctional dicarboxylic acid;

(b) from about 4 to about 25 mole % of at least one difunctional sulfomonomer containing at least one metallic sulfonate group attached to an aromatic or cycloaliphatic nucleus wherein the functional groups are hydroxy, carboxyl or amino;

(c) at least one difunctional reactant selected from a glycol or a mixture of a glycol and diamine having two -NRH groups, the glycol containing two $-CH_2-OH$ groups of which

(1) at least 15 mole % is a poly(ethylene glycol) having the structural formula

$H\!-\!(OCH_2-CH_2)_n\!-\!OH$,

n being an integer of from 2 to about 20, or

(2) of whioh from about 0.1 to less than about 15 mole % is a poly(ethylene glycol) having the structural formula

$H\!-\!(OCH_2-CH_2)_n\!-\!OH$,

n being an integer of between 2 and about 500, and with the proviso that the mole % of said poly(ethylene glycol) within said range is inversely proportional to the quantity of n within said range;

(d) from none to about 40 mole % of difunctional reactant selected from hydroxycarboxylic acids having one $-C(R)_2-OH$ group, aminocarboxylic acids having one -NRH group, and amino-alcohols having one $-C(R)_2-OH$ group and one -NRH group, or mixtures of said difunctional reactants, and

(e) from about 0.5 to about 20 mole % of at least one ethylenically unsaturated mono- or dicarboxylic acid;

wherein each R in the (c) and (d) reactants is a hydrogen atom or an alkyl group of 1 to 4 carbons.

In the above polymeric material is it preferred that a very minor amount, e.g., less than about 10 mole percent based on total moles of all reactants, of reactant (d) is employed; that at least about 70 mole percent of reactant (c) is glycol; that at least about 70 mole percent of all hydroxy equivalents are present in the glycol; that a substantial portion of reactant (c) is a cycloaliphaticdimethanol, e.g., up to 50 mole percent of a cycloaliphaticdimethanol such as 1,4-cyclohexanedimethanol; and that reactant (e) is an α,β-unsaturated acid which has the formula:

$R-CH=CH-R'$

wherein R is H, alkyl or arylcarboxy and R′ is carboxy or arylcarboxy. The alkyl of the α,β-unsaturated acid has one to six carbon atoms and is preferably methyl or ethyl. The aryl portion of the arylcarboxy moiety of the α,β-unsaturated acid is a phenyl or naphthyl derivative; preferred is phenyl.

In preferred embodiments of the present invention, with reference to $R-CH=CH-R^1$, this reactant is selected from one or a mixture of dicarboxystilbenes, carboxycinnamic acids, maleic acid or anhydrides or esters thereof, and is present in reacted form in the polymer in concentrations from about 3.0 to about 15.0

mole % and most preferably from about 4.0 to about 12 mole % based on the aforesaid 200 mole %.

In the polymeric material useful in the present invention, the metallic portion of the metallic sulfonate group is preferably a monovalent metal such as $Na^+$, $K^+$, or $Li^+$.

Other more specific preferred embodiments of the present invention include wherein the polyester acid component of the polymeric material is comprised of 60 to 88 mole percent isophthalic acid, 6 to 15 mole percent 5-sodiosulfoisophthalic acid, and 8 to 24 mole percent 4-carboxycinnamic acid, and the diol component is diethylene glycol: or wherein the polyester acid component of the polymeric material is comprised of 78 to 80 mole percent isophthalic acid, 10 to 11 mole percent 5-isodiosulfoisophthalic acid, and 10 to 11 mole percent, 1,4-phenylenediacrylic acid, and the diol component is diethylene glycol; or wherein the polyester acid component of the polymeric material is comprised of about 72 mole percent isophthalic acid, about 18 mole percent 5-sodiosulfoisophthalic acid, and about 10 mole percent 4-carboxycinnamic acid, and the diol component is about 54 mole percent diethylene glycol and about 46 mole percent 1,4-cyclohexanedimethanol.

The polymers and their preparations and their use as curable clear sizing agents for fibers, and as clear coatings or films which can be cationically dyed are given in greater detail in U.S. Patent 4,073,777, the disclosure of which is incorporated herein by reference in its entirety. It is noted that this patent, in Column 11 alludes to aqueous dissipations of the curable polymers containing organic dyes, pigments, stabilizers or other additives, however, it does not teach specific printing ink systems, their preparations such as to achieve the stability and homogeniety required of printing inks, or their utility, or other specific stable and homogeneous coating formulations or applications, and the teachings of this patent appear to be essentially limited to the art of non-colored fiber sizing. Other patents which describe processes for preparing polymers where such processes are useful for preparing the polymeric material of the present invention, are U.S. Patents 2,465,319; 3,018,272; 2,901,466; 3,075,952; 3,033,822; 3,033,826; and 3,033,827; the disclosures of which are incorporated herein by reference in their entirety.

Dyes useful in this invention are those classified by the Colour Index as disperse colors. They may be of any chemical class such as azo, anthraquinone, methine, and disazo, which are characterized by the absense of any pendant water solubilizing groups such as a sulfonic acid group or salt thereof. Two or more disperse dyes may be blended in to the same polymer to produce a desired ink shade, or two or more inks may be combined for a desired color.

Of particular interest are disperse dyes used to dye textile fibers such as acetate, polyester, or nylon fibers, exemplified by C.I. Disperse Yellow 99, Disperse Yellow 200, Disperse Yellow 88, Disperse Yellow 54, Disperse Yellow 64, Disperse Yellow 108, Disperse Yellow 3, and Disperse Yellow 23, C.I. Disperse Red 30, Disperse Red 88, Disperse Red 338, Disperse Red 177, Disperse Red 117, Disperse Red 339, Disperse Red 305, Disperse Red 307, Disperse Red 340, Disperse Red 309, Disperse Red 65, Disperse Red 60, Disperse Red 72, Disperse Red 73, Disperse Red 82, Disperse Red 3343, Disperse Red 55, and Disperse Red 167, C.I. Disperse Blue 3, Disperse Blue 102, Disperse Blue 118, Disperse Blue 27, Disperse Blue 79, and 79:1, Disperse Blue 337, Disperse Blue 338, Disperse Blue 60, Disperse Blue 317, Disperse Blue 56, Disperse Blue 73, Disperse Blue 281, and Disperse Blue 148, C.I. Disperse Orange 25, Disperse Orange 37, Disperse Orange 145, Disperse Orange 136, Disperse Orange 57, Disperse Orange 30, Disperse Orange 41, Disperse Orange 44, C.I. Disperse Brown 1, and Disperse Brown 22.

The aqueous inks of the present invention contain from about 0.1 to about 30.0 weight %, preferably from about 0.5 to about 10 weight % of at least one particulate material, and from about 1 to about 50 weight %, preferably from about 10 to about 30 weight % of curable polyester material. These concentrations are based on the total weight of the finished ink and, of course, such concentrations are sufficient for use in ink applications. The balance of the ink is water at a concentration sufficient to provide an ink which is suitable for use in an ink application. A preferred amount of water of the inks of the invention is from about 30% to 80%; more preferred is about 40% to 60%, based on the total weight of the finished ink. At least one particulate material in the ink must be a disperse dye or a pigment. Of course, the ink of this invention can contain other particulate or non-particulate materials as described herein.

The printing inks of this invention can be cured or cross-linked with either radiation, electron beam or heat. Some of the inks are curable with ultraviolet lamps or ultraviolet lamp, e.g., an American Ultraviolet Co. C1006A Mini Laboratory Conveyor Instrument. The rate of curing can be increased by the addition of various photo-initiators such as Vicure 100630, Trigonal 14 or P-1, 2-chlorothioxenthone, UVimer SBE, Irgacure 651, Ultra Cure I-100, and Benzophenone plus Michler's ketone. The coated substrates can be heated with infrared heat lamps, a laboratory heat gun or in a laboratory heating unit such as Therm-o-Type Model 101. The cured coating exhibits excellent adhesion, water-resistance, gloss, scuff resistance, chemical resistance, solvent resistance, block resistance, and flexibility on various substrates. A wet/rub (water/abrasion) test is used to measure adhesion and water-resistance. The cured samples are either spotted with or submerged in water at room temperature for a certain length of time (more than 5 minutes) and the samples then wiped with a tissue. If the film does not wipe off, the sample is considered to be cured or cross-linked to yield an ink having the above favorable properties.

In addition, the inks of the present invention may be superior over prior aqueous inks in one or more of such properties as pigment wetting, pigment stability, temperature stability (heat and freeze-thaw), non-settling for extended periods of time, nonpolluting with respect to odor and volatile organics, nonflocculating, long "open" time in the press fountain, wide viscosity range inks, adhesion to a variety of substrates, hardness, drying rate

on substrates, film-forming properties at low temperatures without organic co-solvents, compatibility with other water-based inks, ink mileage characteristics (considerable water dilution allowable at the press), ink press stability in general, printability (clean, sharp transfer without "stringing or misting"), trapping easy clean up, nonplugging of printing plates, redispersibility or rewetting, crinkle resistance, alkali and detergent resistance, lightfastness, toughness, substrate wetting, hold-out, opacity, dry-rate, and no offset on the printing press (coating e.g. on tensions rollers).

The present printing inks may be blended with organic solvents, stabilizers, surfactants, thickening agents, biocides, humectants, or other additives, to contribute to the intended end use. The inks may be printed, for example, on paper, polyester, polyethylene, polypropylene, aluminum, or glass by various printing methods such as letterpress, flexography, gravure, screen, or ink jet.

Manufacture of the present printing inks most preferably employ special procedures in order to ensure proper dye or pigment dispersion which will afford smooth, uniform and visually acceptable coatings. These procedures, in a preferred embodiment, employ the steps of preparing an aqueous dispersion filtrate as in Example 1 below, bringing the filtrate up to a temperature of from about 90° C to about 100° C, adding the dye in powder form with agitation to the filtrate to form a slurry and continue the heating and agitation for at least about 30 minutes, filtering the hot slurry through a course glass fritted funnel, cooling the filtrate to below about 30° C and filtering it through solka floc filtering aid.

With reference to the aforesaid water insoluble, particulate material, in general, exemplary useful C.I. pigments are given in the following table:

Pigments

| Generic Name | C.A. Index/Chemical Name |
|---|---|
| C.I. Pigment Yellow 17 | Butanamide, 2,2'-[(3,3'-dichloro[1,1'-bipehnyl] 4,4'-diyl)bis(azo)bis [N-(2-methoxypehnyl)-3-oxo- |

| Generic Name | C.A. Index/Chemical Name |
|---|---|
| C.I. Pigment Blue 27 | Ferrate (4-1), hexakis (cyano-C)-ammonium iron (3+)(1:1:1) |
| C.I. Pigment Red 49:2 | 1-Naphthalenesulfonic acid, 2-[(2-hydroxy-1-naphthalenyl)azo]-, calcium salt (2:1) |
| C.I. Pigment Red 81:1 | Benzoic acid, 2,-[6-ethyl-amino)-3-(ethylimino)-2,7-dimethyl-3H-xanthen-9-yl]-, ethyl ester, w/molybdenum tungsten hydroxide oxide phosphate |

| | |
|---|---|
| C.I. Pigment Red 81:3 | Benzoic acid, 2-[6-ethylamino)-3-ethylimino)-2,7-dimethyl-3H-xanthen-9-yl]-, ethyl ester, molybdatesilicate |
| C.I. Pigment Red 81:x | Benzoic acid, 2-[6-(ethylamino)-3-(ethylimino)-2,7-dimethyl-3H-xanthen-9-yl]-, ethyl ester, molybdatephosphate |
| C.I. Pigment Yellow 83 | Butanamide, 2,2'-[(3,3'-dichloro[1,1'-biphenyl]-4,4'-diyl)bis(azo)bis[N-(4-chloro-2,5-dimethoxyphenyl)-3-oxo- |
| C.I. Pigment Red 57:1 | 2-Naphthalenecarboxylic acid, 3-hydroxy-4-[(4-methyl-2-sulfophenyl)azo]-, calcium salt (1:1) |
| C.I. Pigment Red 49:1 | 1-Naphthalenesulfonic acid, 2-[(2-hydroxy-1-naphthalenyl)azo]-, barium salt (2:1) |
| C.I. Pigment Violet 23 | Diindolo[3,3',2'm] triphenodioxazine, 8,18-dichloro-5,15-diethyl-5,15-dihydro- |
| C.I. Pigment Green 7 | C.I. Pigment Green 7 |

| Generic Name | C.A. Index/Chemical Name |
|---|---|
| C.I. Pigment Blue 61 | Benzenesulfonic acid, [[4-[[4-phenylamino)-phenyl]-[4-(phenylimino)-2,5-cyclohexadien-1-ylidene]methyl]-phenyl] amino]- |
| C.I. Pigment Red 48:1 | 2-Naphthalenecarboxylic acid, 4-[(5-chloro-4-methyl-2-sulfophenyl)azo]-3-hydroxy-, barium salt (1:1) |

| Generic Name | C.A. Index/Chemical Name |
|---|---|
| C.I. Pigment Red 52:1 | 2-Naphthalenecarboxylic acid, 4-[(4-chloro-5-methyl-2-sulfophenyl)azo]-3-hydroxy-, calcium salt (1:1) |
| C.I. Pigment Violet 1 | Ethanaminium, N-[9-(2-carboxyphenyl)-6-(diethylamino)-3H-xanthen-3-ylidene]-N-ethyl-, molybdatetungstatephosphate |
| C.I. Pigment White 6 | Titanium oxide ($TiO_2$) |
| C.I. Pigment Blue 15 | Copper, [29H, 31H-phthalocyaninato (2-)-$N^{29}$, $N^{30}$, $N^{31}$, $N^{32}$]-, (Sp-4-1)- |
| C.I. Pigment Yellow 12 | Butanamide, 2,2'-[(3,3'-dichloro[1,1'-biphenyl]-4,4'-diyl)bis(azo)]bis[3-oxo-N-phenyl- |
| C.I. Pigment Blue 56 | Benzenesulfonic acid, 2-methyl-4-[[4-[[4-[(3-methylphenyl)amino]phenyl]-[4-[(3-methyl-phenyl)-imino]-2-5-cyclohexadien-1-ylidene]methyl]-phenyl]amino]- |
| C.I. Pigment Orange 5 | 2-Naphthalenol, 1-[(2,4-dinitrophenyl)azo]- |
| C.I. Pigment Black 7 | Carbon black |
| C.I. Pigment Yellow 14 | Butanamide, 2,2'-[(3,3'-dichloro[1,1'-biphenyl]-4,4'-diyl)bis(azo)]bis-[N-(2-methylphenyl0-3-oxo- |
| C.I. Pigment Red 48:2 | 2-Naphthalenecarboxylic acid, 4-[(5-chloro-4-methyl-2-sulfophenyl)-azo]-3-hydroxy-, calcium salt (1:1) |

| | |
|---|---|
| C.I. Pigment Blue 15:3 | Copper, [29H, 31H-phthalocyaninato (2-)-$N^{29}$, $N^{30}$, $N^{31}$, $N^{32}$]-, (SP-4-1)- |
| C.I. Pigment Yellow 1 | Butanamide, 2-[(4-methyl -2-nitrophenyl)azo]-3-oxo-N-phenyl- |
| C.I. Pigment Yellow 3 | Butanamide, 2-[(4-chloro-2-nitrophenyl) azo]-N-(2-chlorophenyl) -3-oxo- |
| C.I.Pigment Yellow 13 | Butanamide, 2,2'-[(3,3'-dichloro[1,1'-biphenyl] -4,4'-diyl)bis(azo)]bis [N-(2,4-dimethylphenyl)-B-oxo- |
| C.I. Pigment Orange 16 | Butanamide, 2,2'-[(3,3'-dimethoxy[1,1'-biphenyl] -4,4'-diyl)bis(azo)]bis [3-oxo-N-phenyl- |
| C.I. Pigment Yellow 55 | Butanamide, 2,2'-[(3,3'-dichloro[1,1'-biphenyl] -4,4'-diyl)bis(azo)]bis [N-(4-methylphenyl)-3-oxo- |
| C.I. Pigment Red 41 | 3H-Pyrazol-3-one,4,4'-[(3,3'-dimethoxy[1,1'-biphenyl]-4,4'-diyl)bis (azo)]bis[2,4-dihydro-5-methyl-2-phenyl- |

| Generic Name | C.A. Index/Chemical Name |
|---|---|
| C.I. Pigment Orange 34 | 3H-Pyrazol-3-one,4,4'-[(3,3'-dichloro[1,1'-biphenyl]-4,4'-diyl)bis (azo)]bis[2,4-dihydro-5-methyl-2-(4-methylphenyl)- |
| C.I. Pigment Blue 62 | 4,4'-Bis(diethylamino) benzophenone condensed with N-ethyl-1-naphthyl-amine in toluene with phosphorous oxychloride and converted to the copper ferrocyanide salt (PTMA salt in P.Blue 1) |

| | |
|---|---|
| C.I. Pigment Violet 1 | Ethanaminium, N-[9-(2-carboxyphenyl)-6-(diethylamino)-3H-xanthen-3-ylidene]-N-ethyl-, molybdatetungstatephosphate |
| C.I. Pigment Red 22 | 2-Naphthalenecarboxamide, 3-hydroxy-4-[(2-methyl-5-nitrophenyl)azo]-N-phenyl- |
| C.I. Pigment Red 170 | 2-Naphthalenecarboxamide, 4-[[(4-(aminocarbonyl)phenyl]azo]-N-(2-ethoxyphenyl)-3-hydroxy- |
| C.I. Pigment Red 88 | Benzo[b]thiophen-3(2H)-one, 4,7-dichloro-2-(4,7-dichloro-3-oxobenzo[b]thien-2(3H)-ylidene)- |
| C.I. Pigment Yellow 151 | A diazotized aniline derivative coupled with an acetoacetyl derivative of 5-aminobenzimidazolone |
| C.I. Pigment Violet 23 | Diindolo[3,3',2'm]triphenodioxazine, 8-18-dichloro-5,15-diethyl-5,15-dihydro- |
| C.I. Pigment Red 184 | A diazotized substituted aniline coupled with a derivative of 3-hydroxy-2-naphthanilide |

| Generic Name | C.A. Index/Chemical Name |
|---|---|
| C.I. Pigment Blue 1:2 | Ethanaminium, N-[4-[[4-(diethylamino)phenyl][4-(ethylamino)-1-1 naphthalenyl]methylene]-2,5-cyclohexadien-1-ylidene]-N-ethyl-, [orthosilicato(4-)]hexatriacontaoxo-dodecamolybdate(4)-(4:1) |
| C.I. Pigment Red 3 | 2-Naphthalenol, 1-[(4-methyl-2-nitrophenyl)azo]- |

| | |
|---|---|
| C.I. Pigment Blue 15:1 | Copper,[29H,32H-phthalocyaninato(2-)-$N^{29}$,$N^{30}$,$N^{31}$,$N^{32}$]-,(SP-4-1)- or Copper,[chloro-29H,31H-phthalocyaninato(2-1)-$N^{29}$,$N^{30}$,$N^{31}$,$N^{32}$]- |
| C.I. Pigment Red 23 | 2-Naphthalenecarboxamide, 3-hydroxy-4-[(2-methoxy-5-nitrophenyl)azo]-N-(3-nitrophenyl)- |
| C.I. Pigment Red 112 | 2-Naphthalenecarboxamide, 3-hydroxy-N-(2-methylphenyl)-4-[(2,4,5-trichlorophenyl)azo]- |
| C.I. Pigment Yellow 126 | A tetrazotized derivative of 3,3-dichlorobenzidene coupled with a derivative of acetoacetanilide |
| C.I. Pigment Red 169 | 3-Ethylamino-p-cresol condensed with phthalic anhydride, esterified with ethanol and a mineral acid, and converted to the copper ferrocyanide complex (chloride salt is C.I. Basic Red 1, PTMA salt is P.Red 81:1). |
| C.I. Pigment Orange 5 | 2-Naphthalenol, 1-](2,4-dinitrophenyl)azo]- |

| Generic Name | C.A. Index/Chemical Name |
|---|---|
| C.I. Pigment Orange 13 | 3H-Pyrazol-3-one, 4,4'-[(3,3'-dichloro[1,1'-biphenyl]-4,4'-diyl)bis(azo)]bis[2,4-dihydro-5-methyl-2-phenyl- |
| C.I. Pigment Orange 34 | 3H-Pyrazol-3-one, 4,4'-[(3,3'-dichloro[1,1'-biphenyl]-4,4'-diyl)bis(azo)]bis[2,4-dihydro-5-methyl-2-(4-methylphenyl)- |

| | |
|---|---|
| C.I. Pigment Red 10 | 2-Naphthalenecarboxamide, 4-[(2,5-dichlorophenyl) azo]-3-hydroxy-N-(4-methylphenyl)- |
| C.I. Pigment Blue 1:X | Ethanaminium, N-[4-[[4-(diethylamino)phenyl] [4-(ethylamino)-1-naphthalenyl]methylene]-2,5-cyclohexadien-1-ylidene]-N-ethyl-, molybdate-phosphate |
| C.I. Pigment Yellow 42 | Iron oxide ($Fe_2O_3$) hydrate |
| C.I. Pigment Red 101 | Iron oxide ($Fe_2O_3$) |
| C.I. Pigment Brown 6 | Iron oxide ($Fe_2O_3$), some FeO and $Fe_2O_3 \cdot H_2O$ |
| C.I. Pigment Brown 7 | Iron oxide ($Fe_2O_3$) plus varying amounts of clay |
| C.I. Pigment Brown 7:X | $Fe_2O_3 \cdot x MnO_2$ with varying amounts of clay |
| C.I. Pigment Black 11 | $FeO \cdot Fe_2O_3$ |
| C.I. Pigment Metal 1 | Aluminum |
| C.I. Pigment Metal 2 | Copper, zinc |

The inherent viscosities (I.V.) of the particular polymeric materials useful herein range from about 0.1 to about 1.0 determined according to ASTM D2857-70 procedure, in a Wagner Viscometer of Lab Glass, Inc., of Vineland, New Jersey, having a 1/2 mL capillary bulb, using a polymer concentration about 0.25% by weight in 60/40 by weight of phenol/tetrachloroethane. The procedure is carried out by heating the polymer/solvent system at 120°C for 15 minutes, cooling the solution to 25°C and measuring the time of flow at 25°C. The I.V. is calculated from the equation

$$(n)\ \begin{matrix}25°C\\0.50\%\end{matrix} = \frac{\ln \frac{t_s}{t_o}}{C}$$

where:
(n) = inherent viscosity at 25°C at a polymer concentration of 0.25 g/10 mL of solvent;
1n = natural logarithm;
$t_2$ = sample flow time;
$t_0$ = solvent-blank flow time; and
C = concentration of polymer in grams per 100 mL of solvent = 0.25.

The units of the inherent viscosity throughout this application are in deciliters/gram. It is noted that higher concentrations of polymer, e.g., 0.50 g of polymer/100 mL solvent may be employed for more precise I.V. determinations.

The following examples are to illustrate the invention but should not be interpreted as a limitation thereon.

Examples

1. Preparation of Water-Dispersible Polyester

To 1157.0g of distilled water at 85° to 90°C is added portionwise with good stirring. 300 g of a polymer prepared in accordance with the teachings of the aforesaid patent from isophthalic acid (78 mole %), 4-carboxycinnamic acid (11 mole %), 5-sodiosulfoisophthalic acid (11 mole %) and diethylene glycol (100 mole %), and having an I.V. of 0.43. After the addition is complete, the dispersion is heated at 85° to 90°C with stirring for three hours and then filtered. The concentration of polymer in the filtrate is approximately 26.5% by weight, and the filtrate is used in the following examples.

2. Ink Preparation

(a) Yellow Ink

- To 125.0g of the filtrate of Example 1 stirred and heated to 95°C, is added 2.5g of C.I. Disperse Yellow 88 (dry). The resultant slurry is heated at 95° to 100°C for 2 hours and then filtered hot through a course fritted glass funnel. The filtrate is cooled to room temperature and filtered through a solka floc filtering aid to give 102.8 g of a yellow ink which contains approximately 26 weight % polymer and approximately 0.66% by weight of the dye.

(b) Red Ink

- To 125.0g of stirred filtrate of Example 1, 5.0 g of C.I. Disperse Red 339 (dry) is added and the slurry heated to 95°C. The slurry is further heated at 90° to 95°C for 2 hours and then filtered hot through a course fitted glass funnel. The filtrate is allowed to sit overnight at room temperature and then filtered with solka floc filtering aid to yield 82.7 g of a red ink which contains approximately 26 weight % polymer and about 5.07% by weight of the dye.

(c) Blue Ink

- To 125.0g of stirred filtrate of Example 1, 5.0g of C.I. Disperse Blue 337 is added, and the mixture is heated to 95°C with stirring and heating continued for 2 hours at 95° to 100°C. The hot mixture is filtered through a course fritted glass filter. The filtrate is allowed to sit overnight at room temperature and then filtered again to yield 87.0g of a blue ink which contains approximately 26 weight % polymer and about 3.44% by weight of the dye.

3. Radiation Curing of the Ink

To 5.0g of the ink from Example 2(a), 0.1 g of Irgacure 651 (7.2% on weight of polymer) in one milliter of methanol is added. The ink is coated with a No. 6 wire wound draw-down rod on a 4 x 5.5 inch aluminum sheet which has been cleaned with ethanol. The coating is allowed to dry at room temperature and then passed twice under an ultraviolet lamp instrument (200 watts/inch at 20 ft/minute) of American Ultraviolet Co. The coating could not be wiped off after being submerged in water for one week at 25°C.

4. Curing with Heat

The ink of Example 1(c) is coated on aluminum foil with a No. 6 wire wound draw-down rod and the coating is dried at room temperature. The coated foil is heated with an I.R. heating lamp for a few minutes. The cured coating passed the water/abrasion test of Example 3 after eleven days submersion.

The following table gives other exemplary polyesters useful in the present invention wherein the total moles of acids A, B, and C equals 100 mole %, the total moles of DEG and CHDM equals 100 mole %, and wherein said mole concentrations are determined by analysis of the polymers, e.g., by NMR and infrared. As an example, where the unsaturated Acid-B constitutes 10 mole % of the total acid moles, it would only constitute 5 mole % of the total acid and glycol moles.

Table 1

| Acid-A (Mole %) | Acid Component Acid-B (Mole %) | Acid-C (Mole %) | Diol Component Diol (Mole %) | I.V. |
|---|---|---|---|---|
| Isophthalic (82) | 4-carboxycinnamic acid (10) | SIP (8) | DEG (100) | 0.2-0.57 |
| Isophthalic (78) | 4-carboxycinnamic acid (11) | SIP (11) | DEG (100) | 0.47 |
| Isophthalic (72) | 4-carboxycinnamic acid (10) | SIP (18) | DEG (54) CHDM (46) | 0.16 |
| Isophthalic (69) | 4-carboxycinnamic acid (20) | SIP (11) | DEG (100) | 0.37 |
| Isophthalic (78) | 1,4-phenylenediacrylic acid (11) | SIP (11) | DEG (100) | 0.43 |

SIP = 5-sodiosulfoisophthalic acid

DEG = diethylene glycol

CHDM = 1,4-cyclohexanedimethanol

In further preferred embodiments of the invention, the polyester is as defined in the claims hereof.

The invention has been described in detail with particular reference to preferred embodiments thereof, but it will be understood that variations and modifications can be effected within the spirit and scope of the invention.

## Claims

1. An ink comprising a stable, aqueous system comprised of

A. from about 0.1 to about 30% by weight of at least one essentially water insoluble, particulate material,

B. from about 1.0 to about 50% by weight of curable, linear water-dispersible polymer having carbonyloxy linking groups in the linear molecular structure wherein up to 80% of the linking groups are carbonylamido linking groups, the polymer having an inherent viscosity of from about 0.1 to about 1.0 measured in a 60/40 parts by weight solution of phenol/tetrachloroethane at 25°C and at a concentration of 0.25 gram of polymer in 100 mL of the solvent, the polymer containing substantially equimolar proportions of acid equivalents (100 mole %) to hydroxy and amino equivalents (100 mole %), the polymer comprising the reaction products of reactants selected from (1), (2), (3), (4), and (5), or the ester forming or esteramide forming derivatives thereof, as follows, wherein all stated mole percentages are based on the total of all acid, hydroxyl and amino equivalents being equal to 200 mole %:

(1) at least one difunctional dicarboxylic acid;

(2) from about 4 to about 25 mole % of at least one difunctional sulfomonomer containing at least one metallic sulfonate group attached to an aromatic or cycloaliphatic nucleus wherein the functional groups are hydroxy, carboxyl or amino;

(3) at least one difunctional reactant selected from a glycol or a mixture of a glycol and diamine having two -NRH groups, the glycol containing two $-CH_2-OH$ groups of which

(a) at least 15 mole % is a poly(ethylene glycol) having the structural formula

$H{+}OCH_2-CH_2{+}_nOH$,

n being an integer of from 2 to about 20, or

(b) of which from about 0.1 to less than about 15 mole % is a poly(ethylene glycol) having the structural formula

$H{+}OCH_2-CH_2{+}_nOH$,

n being an integer of between 2 and about 500, and with the proviso that the mole % of said poly(ethylene glycol) within said range is inversely proportional to the quantity of n within said range;

(4) from none to about 40 mole % of difunctional reactant selected from hydroxycarboxylic acids having one $-C(R)_2-OH$ group, aminocarboxylic acids having one -NRH group, and amino-alcohols having one $-C(R)_2-OH$ group and one -NRH group, or mixtures of said difunctional reactants; and

(5) from about 0.5 to about 20 mole % of at least one ethylenically unsaturated mono- or dicarboxylic acid;

wherein each R in the (3) and (4) reactants is a hydrogen atom or an alkyl group of 1 to 4

carbons, and

C. water, in an amount to provide an ink which is suitable for use in an ink application,

provided that, at least one particulate material is a disperse dye or pigment.

2. The ink of Claim 1 wherein reactant (5) is α,β-unsaturated acid having the formula R-CH=CH-R′ wherein R is H, alkyl or arylcarboxy, and R′ is carboxy or arylcarboxy.

3. The ink of Claim 1 wherein the particulate material is a disperse dye.

4. The ink of Claim 1 wherein the polyester acid component is comprised of 60 to 88 mole percent isophthalic acid, 6 to 15 mole percent 5-sodiosulfoisophthalic acid, and 8 to 24 mole percent 4-carboxycinnamic acid, and the diol component is diethylene glycol.

5. The ink of Claim 1 wherein the polyester acid component is comprised of 78 to 80 mole percent isophthalic acid, 10 to 11 mole percent 5-isodiosulfoisophthalic acid, and 10 to 11 mole percent, 1,4-phenylenediacrylic acid, and the diol component is diethylene glycol.

6. The ink of Claim 1 wherein the polyester acid component is comprised of about 72 mole percent isophthalic acid, about 18 mole percent 5-sodiosulfoisophthalic acid, and about 10 mole percent 4-carboxycinnamic acid, and the diol component is about 54 mole percent diethylene glycol and about 46 mole percent 1,4-cyclohexanedimethanol.

7. The ink of Claim 1 wherein the particulate material comprises from about 0.5 to about 10.0 weight % of the ink and is selected from C.I. Disperse Yellow 99, Disperse Yellow 200, Disperse Yellow 88, Disperse Yellow 54, Disperse Yellow 64, Disperse Yellow 108, Disperse Yellow 3, and Disperse Yellow 23, C.I. Disperse Red 30, Disperse Red 88, Disperse Red 338, Disperse Red 177, Disperse Red 117, Disperse Red 339, Disperse Red 305, Disperse Red 307, Disperse Red 340, Disperse Red 309, Disperse Red 65, Disperse Red 60, Disperse Red 72, Disperse Red 73, Disperse Red 82, Disperse Red 3343, Disperse Red 55, and Disperse Red 167, C.I. Disperse Blue 3, Disperse Blue 102, Disperse Blue 118, Disperse Blue 27, Disperse Blue 79, and 79:1, Disperse Blue 337, Disperse Blue 338, Disperse Blue 60, Disperse Blue 317, Disperse Blue 56, Disperse Blue 73, Disperse Blue 281, and Disperse Blue 148, C.I. Disperse Orange 25, Disperse Orange 37, Disperse Orange 145, Disperse Orange 136, Disperse Orange 57, Disperse Orange 30, Disperse Orange 41, Disperse Orange 44, C.I. Disperse Brown 1, and Disperse Brown 22.

8. The ink of Claim 2 wherein the particulate material comprises from about 0.5 to about 10.0 weight % of the ink and is selected from C.I. Disperse Yellow 99, Disperse Yellow 200, Disperse Yellow 88, Disperse Yellow 54, Disperse Yellow 64, Disperse Yellow 108, Disperse Yellow 3, and Disperse Yellow 23, C.I. Disperse Red 30, Disperse Red 88, Disperse Red 338, Disperse Red 177, Disperse Red 117, Disperse Red 339, Disperse Red 305, Disperse Red 307, Disperse Red 340, Disperse Red 309, Disperse Red 65, Disperse Red 60, Disperse Red 72, Disperse Red 73, Disperse Red 82, Disperse Red 3343, Disperse Red 55, and Disperse Red 167, C.I. Disperse Blue 3, Disperse Blue 102, Disperse Blue 118, Disperse Blue 27, Disperse Blue 79, and 79:1, Disperse Blue 337, Disperse Blue 338, Disperse Blue 60, Disperse Blue 317, Disperse Blue 56, Disperse Blue 73, Disperse Blue 281, and Disperse Blue 148, C.I. Disperse Orange 25, Disperse Orange 37, Disperse Orange 145, Disperse Orange 136, Disperse Orange 57, Disperse Orange 30, Disperse Orange 41, Disperse Orange 44, C.I. Disperse Brown 1, and Disperse Brown 22.

9. The ink of Claim 4 wherein the particulate material comprises from about 0.5 to about 10.0 weight % of the ink and is selected from C.I. Disperse Yellow 99, Disperse Yellow 200, Disperse Yellow 88, Disperse Yellow 54, Disperse Yellow 64, Disperse Yellow 108, Disperse Yellow 3, and Disperse Yellow 23, C.I. Disperse Red 30, Disperse Red 88, Disperse Red 338, Disperse Red 177, Disperse Red 117, Disperse Red 339, Disperse Red 305, Disperse Red 307, Disperse Red 340, Disperse Red 309, Disperse Red 65, Disperse Red 60, Disperse Red 72, Disperse Red 73, Disperse Red 82, Disperse Red 3343, Disperse Red 55, and Disperse Red 167, C.I. Disperse Blue 3, Disperse Blue 102, Disperse Blue 118, Disperse Blue 27, Disperse Blue 79, and 79:1, Disperse Blue 337, Disperse Blue 338, Disperse Blue 60, Disperse Blue 317, Disperse Blue 56, Disperse Blue 73, Disperse Blue 281, and Disperse Blue 148, C.I. Disperse Orange 25, Disperse Orange 37, Disperse Orange 145, Disperse Orange 136, Disperse Orange 57, Disperse Orange 30, Disperse Orange 41, Disperse Orange 44, C.I. Disperse Brown 1, and Disperse Brown 22.

10. The ink of Claim 5 wherein the particulate material comprises from about 0.5 to about 10.0 weight % of the ink and is selected from C.I. Disperse Yellow 99, Disperse Yellow 200, Disperse Yellow 88, Disperse Yellow 54, Disperse Yellow 64, Disperse Yellow 108, Disperse Yellow 3, and Disperse Yellow 23, C.I. Disperse Red 30, Disperse Red 88, Disperse Red 338, Disperse Red 177, Disperse Red 117, Disperse Red 339, Disperse Red 305, Disperse Red 307, Disperse Red 340, Disperse Red 309, Disperse Red 65, Disperse Red 60, Disperse Red 72, Disperse Red 73, Disperse Red 82, Disperse Red 3343, Disperse Red 55, and Disperse Red 167, C.I. Disperse Blue 3, Disperse Blue 102, Disperse Blue 118, Disperse Blue 27, Disperse Blue 79, and 79:1, Disperse Blue 337, Disperse Blue 338, Disperse Blue 60, Disperse Blue 317, Disperse Blue 56, Disperse Blue 73, Disperse Blue 281, and Disperse Blue 148, C.I. Disperse Orange 25, Disperse Orange 37, Disperse Orange 145, Disperse Orange 136, Disperse Orange 57, Disperse Orange 30, Disperse Orange 41, Disperse Orange 44, C.I. Disperse Brown 1, and Disperse Brown 22.

11. The ink of Claim 6 wherein the particulate material comprises from about 0.5 to about 10.0 weight % of the ink and is selected from C.I. Disperse Yellow 99, Disperse Yellow 200, Disperse Yellow 88, Disperse Yellow 54, Disperse Yellow 64, Disperse Yellow 108, Disperse Yellow 3, and Disperse Yellow 23, C.I. Disperse Red 30, Disperse Red 88, Disperse Red 338, Disperse Red 177, Disperse Red 117, Disperse Red 339, Disperse Red 305, Disperse Red 307, Disperse Red 340, Disperse Red 309, Disperse Red 65,

Disperse Red 60, Disperse Red 72, Disperse Red 73, Disperse Red 82, Disperse Red 3343, Disperse Red 55, and Disperse Red 167, C.I. Disperse Blue 3, Disperse Blue 102, Disperse Blue 118, Disperse Blue 27, Disperse Blue 79, and 79:1, Disperse Blue 337, Disperse Blue 338, Disperse Blue 60, Disperse Blue 317, Disperse Blue 56, Disperse Blue 73, Disperse Blue 281, and Disperse Blue 148, C.I. Disperse Orange 25, Disperse Orange 37, Disperse Orange 145, Disperse Orange 136, Disperse Orange 57, Disperse Orange 30, Disperse Orange 41, Disperse Orange 44, C.I. Disperse Brown 1, and Disperse Brown 22.

12. The ink of Claim 1 wherein the particulate material is C.I. Pigment selected from Yellow 17, Blue 27, Red 49:2, Red 81:1, Red 81:3, Red 81:X, Yellow 83, Red 57:1, Red 49:1, Violet 23, Green 7, Blue 61, Red 48:1, Red 52:1, Violet 1, White 6, Blue 15, Yellow 12, Blue 56, Orange 5, Black 7, Yellow 14, Red 48:2, Blue 15:3, Yellow 1, Yellow 3, Yellow 13, Orange 16, Yellow 55, Red 41, Orange 34, Blue 62, Violet 1, Red 22, Red 170, Red 88, Yellow 151, Violet 23, Red 184, Blue 1:2, Red 3, Blue 15:1, Red 23, Red 112, Yellow 126, Red 169, Orange 5, Orange 13, Orange 34, Red 10, Blue 1:X, Yellow 42, Red 101, Brown 6, Brown 7, Brown 7:X, Black 11, Metal 1, and Metal 2.

13. The ink of Claim 2 wherein the particulate material is C.I. Pigment selected from Yellow 17, Blue 27, Red 49:2, Red 81:1, Red 81:3, Red 81:X, Yellow 83, Red 57:1, Red 49:1, Violet 23, Green 7, Blue 61, Red 48:1, Red 52:1, Violet 1, White 6, Blue 15, Yellow 12, Blue 56, Orange 5, Black 7, Yellow 14, Red 48:2, Blue 15:3, Yellow 1, Yellow 3, Yellow 13, Orange 16, Yellow 55, Red 41, Orange 34, Blue 62, Violet 1, Red 22, Red 170, Red 88, Yellow 151, Violet 23, Red 184, Blue 1:2, Red 3, Blue 15:1, Red 23, Red 112, Yellow 126, Red 169, Orange 5, Orange 13, Orange 34, Red 10, Blue 1:X, Yellow 42, Red 101, Brown 6, Brown 7, Brown 7:X, Black 11, Metal 1, and Metal 2.

14. The ink of Claim 4 wherein the particulate material is C.I. Pigment selected from Yellow 17, Blue 27, Red 49:2, Red 81:1, Red 81:3, Red 81:X, Yellow 83, Red 57:1, Red 49:1, Violet 23, Green 7, Blue 61, Red 48:1, Red 52:1,' Violet 1, White 6, Blue 15, Yellow 12, Blue 56, Orange 5, Black 7, Yellow 14, Red 48:2, Blue 15:3, Yellow 1, Yellow 3, Yellow 13, Orange 16, Yellow 55, Red 41, Orange 34, Blue 62, Violet 1, Red 22, Red 170, Red 88, Yellow 151, Violet 23, Red 184, Blue 1:2, Red 3, Blue 15:1, Red 23, Red 112, Yellow 126, Red 169, Orange 5, Orange 13, Orange 34, Red 10, Blue 1:X, Yellow 42, Red 101, Brown 6, Brown 7, Brown 7:X, Black 11, Metal 1, and Metal 2.

15. The ink of Claim 5 wherein the particulate material is C.I. Pigment selected from Yellow 17, Blue 27, Red 49:2, Red 81:1, Red 81:3, Red 81:X, Yellow 83, Red 57:1, Red 49:1, Violet 23, Green 7, Blue 61, Red 48:1, Red 52:1, Violet 1, White 6, Blue 15, Yellow 12, Blue 56, Orange 5, Black 7, Yellow 14, Red 48:2, Blue 15:3, Yellow 1, Yellow 3, Yellow 13, Orange 16, Yellow 55, Red 41, Orange 34, Blue 62, Violet 1, Red 22, Red 170, Red 88, Yellow 151, Violet 23, Red 184, Blue 1:2, Red 3, Blue 15:1, Red 23, Red 112, Yellow 126, Red 169, Orange 5, Orange 13, Orange 34, Red 10, Blue 1:X, Yellow 42, Red 101, Brown 6, Brown 7, Brown 7:X, Black 11, Metal 1, and Metal 2.

16. The ink of Claim 6 wherein the particulate material is C.I. Pigment selected from Yellow 17, Blue 27, Red 49:2, Red 81:1, Red 81:3, Red 81:X, Yellow 83, Red 57:1, Red 49:1, Violet 23, Green 7, Blue 61, Red 48:1, Red 52:1, Violet 1, White 6, Blue 15, Yellow 12, Blue 56, Orange 5, Black 7, Yellow 14, Red 48:2, Blue 15:3, Yellow 1, Yellow 3, Yellow 13, Orange 16, Yellow 55, Red 41, Orange 34, Blue 62, Violet 1, Red 22, Red 170, Red 88, Yellow 151, Violet 23, Red 184, Blue 1:2, Red 3, Blue 15:1, Red 23, Red 112, Yellow 126, Red 169, Orange 5, Orange 13, Orange 34, Red 10, Blue 1:X, Yellow 42, Red 101, Brown 6, Brown 7, Brown 7:X, Black 11, Metal 1, and Metal 2.

17. A cured coating of the ink of Claim 1.

18. A cured coating of the ink of Claim 2.

19. A cured coating of the ink of Claim 3.

20. A cured coating of the ink of Claim 4.

21. A cured coating of the ink of Claim 5.

22. A cured coating of the ink of Claim 6.

23. A cured coating of the ink of Claim 7.

24. A cured coating of the ink of Claim 12.

European Patent Office

# EUROPEAN SEARCH REPORT

Application Number

EP 89 42 0243

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-4 073 777 (G.J. O'NEILL)<br>* Abstract * |  | C 09 D 11/10<br>C 08 G 63/68<br>C 08 G 69/44 |
| A | US-A-4 704 309 (C.H. CONEY)<br>* Abstract * | 1 |  |
| A | US-H- 105 202 (K.R. BARTON) |  |  |
| A | GB-A-1 470 059 (KODAK) |  |  |
|  |  |  | **TECHNICAL FIELDS SEARCHED (Int. Cl.5)** |
|  |  |  | C 09 D<br>C 08 G |

The present search report has been drawn up for all claims

| Place of search | Date of completion of the search | Examiner |
|---|---|---|
| THE HAGUE | 20-10-1989 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)